# EUROPEAN PATENT APPLICATION

(11) **EP 2 261 108 A2**
(43) Date of publication of application: **15.12.2010**
(21) Application number: 10006032.6
(22) Date of filing: 11.06.2010
(51) Int. Cl.: B62H 5/14, B62H 5/20

(54) **Municipal bicycle sharing system**

(30) Priority: 12.06.2009 US 456227; 30.12.2009 US 655400
(71) Applicant: Rzepecki, Stephen Ryan, Wattsburg, PA 16442 (US)
(72) Inventor: Rzepecki, Stephen Ryan, Wattsburg, PA 16442 (US)
(74) Representative: Hössle Patentanwälte Partnerschaft

(57) **Abstract**

A bike share system with the flexibility to anchor the rental bike anywhere at the end of the trip employs a remotely operable lockbox (40') which incorporates a wireless communication card with a GPS receiver. The lock system includes a scissor clamp (70) for grasping the bicycle seat support post and a pair of extended fingers of the scissor clamp which are retained by the clamshell halves of the lockbox. One arm of a U-shaped retainer can be extended into through-bores of first and second ears positioned on opposing sides of the bicycle wheel to lock the wheel against rotation. A mechanical locking device has teeth which engage with protrusions on the other arm of the U-shaped retainer to prevent its movement relative to the lockbox maintaining the other arm in wheel immobilizing position.

## Description

### Technical Field

The present invention is directed to the field of transportation. More particularly, the present invention is directed to a stationless bicycle sharing system and method of conducting such a business from a remote location.

### Background

The sustainability movement has spawned the growth of bicycle rental operations, as a means of improving mobility and reducing automobile dependence. The systems proposed thus far typically involve the provision of a locking station and a rental kiosk where credit card payment can be made. The requirement of such features limits the growth of the business since it requires land acquisition and installation of expensive infrastructure. It also creates a logistical problem for users since the rented bicycle must be returned to one of a limited number of pre-determined locations.

### Summary of the Invention

The present invention removes these down-sides from a bicycle sharing system by allowing the rented vehicle to be locked to any authorized object such as a light post, a telephone pole, a guardrail, or the like. The bicycles themselves will be distinctive in design and color and the lockbox will feature an illuminated status screen. When the lock is engaged and the transaction is complete, the status screen will display "Available". When the bike is placed on temporary hold the screen will display "Hold". When the bike is in need of repair, the status screen will display "Repair". Finally, if the bike is improperly parked and flagged for removal, the screen will display "Relocate".

Additional features of the bicycle sharing system of the present invention include the capability to unlock the bicycle for use from a remote location by using a wireless communication device secured within a lockbox, making the use of kiosks or stands unnecessary. The lockbox will also include a global positioning system (GPS) tracking unit that tracks the real time position of each bike. The GPS receiver and wireless device will be powered by onboard battery(ies) that is/are recharged by a dynamic recharging means such as, for example, a bicycle hub dynamo that recharges the battery(ies) while the bicycle is in motion. The GPS/wireless communication system allows a computer-based, central monitoring and control system to track the position of each bicycle in the system, collect trip data for use by the system administrators and end users, and transmit unlock commands to the manually locked/remotely unlocked locking system on the bicycle when a valid request is received from a potential customer. This electronic locator system should also reduce/eliminate pilfering of bicycles utilized in the system.

The present invention comprises a stationless bike share system for use in municipalities which includes a) a plurality of bicycles, each bicycle of the plurality having a locking system including a lockbox, each lockbox including a GPS tracking system and a wireless communication device, each lockbox functioning as a bicycle securing means to retain a bicycle to a stationary object against unauthorized removal, each lockbox including locking means which is manually locked and remotely unlocked; b) battery means for powering the GPS tracking system and the wireless communication device; c) a remote monitoring system for determining location of each of the bikes, authorizing use by remotely unlocking the locking means upon receipt of a confirmed request. The system further includes an internal hub dynamo to recharge the battery means while the bicycle is in motion. The locking system further includes a U-shaped lock, the lockbox having a plurality of recesses, each of the plurality of recesses designed to receive and secure an arm of said U-shaped lock when the arm is manually inserted therein. The system, more specifically, the lockbox, includes a keypad.

Preferably, the lockbox can be unlocked by a remote signal in response to at least one of five inputs: a) an authorized text "Unlock" message; b) a cell phone request where a user provides proper responsive information; c) a smartphone application request; d) direct entry of account number into the keypad; e) an RFID coded card or other swipe card which communicates customer information to the lockbox.

The keypad further has buttons which include a "Hold" button to allow retention of control of said bicycle for a limited period, a "Repair" button transmitting a signal to said remote monitoring system advising that the bicycle is in need of service, and "Relocate" advising the remote monitoring system of a need to move the bicycle to an alternate location. It is desired that law enforcement personnel will have the means to activate the "Relocate" button. The keypad further includes an "Available" light which illuminates when the arms of said U-shaped lock are manually inserted in the plurality of recesses without one of said auxiliary buttons being depressed.

The invention further includes a method of conducting a stationless bicycle rental business, the method comprising the steps of a) equipping a plurality of bicycles each with i) a GPS tracking system; ii) a wireless communication device; iii) a battery to power the GPS tracking system and the wireless communication device; iv) a lockbox containing the GPS tracking system and the wireless communication device, as well as a remotely operable lock; b) establishing a central monitoring and control system on a remote computer; c) determining a particular real-time position for a particular bicycle; d) transmitting the real-time position to the central monitoring and control system; e) receiving a signal from a prospective customer in proximity to the particular bicycle at the central monitoring and control system; f) storing bits of information contained in the received signal in the database of the computer; g) comparing said stored bits to information contained in said database; h) if the stored bits do not match existing data in the stored bank, establishing a new account for the prospective customer then proceeding to the next step, and if the stored bits do match existing data in the stored bank, proceeding to the next step; j) sending a signal to said remotely operable lock unlocking the lock allowing use of the bicycle by the prospective customer. An additional method step of equipping the bicycle with a dynamic means to recharge said battery during movement of the bicycle is contemplated. The unlocking method step is performed in conjunction with the receipt by the central monitoring and controlling computer of a signal selected from a group consisting of a) an authorized text "Unlock" message; b) a cell phone request where a user provides proper responsive information; c) a smart phone application request; d) direct entry of an account number into the keypad; and, e) an RFID coded card or other swipe card which transmits account information to the lockbox.

The preferred lock system of the present invention comprises a) a scissor-clamp formed by a first arm and a second arm intertwined by a pivot post, each arm having a gripping claw at one end which grasps a seat tube of a bicycle and an extending finger at a distal end of the arm; b) a lockbox having a bottom wall and a lid, the bottom wall and the lid engaging the extending finger of each arm in a closed, latched position securing the extending fingers against movement thereof and preventing the scissor clamp from being removed from the seat tube of the bicycle. In addition, the lock system includes c) a U-shaped retainer having a first arm with a plurality of cylindrical protrusions, a second arm which can be extended outside the lockbox; d) a mechanical locking device which engages the first arm of the U-shaped retainer preventing relative movement between the U-shaped retainer and the lockbox; e) a first ear protruding from a lower side of the bottom of the lockbox on a first side of a wheel of the bicycle, the first ear having a first throughbore; f) a second ear protruding from a lower side of the bottom of the lockbox on a second side of the wheel of the bicycle, the second ear having a second throughbore which is aligned with the first throughbore; whereby the second arm of the U-shaped retainer is extended through the first and second aligned throughbores and the wheel of the bicycle immobilizing the bicycle. The U-shaped retainer can be extended about a post prior to the first arm being engaged by said mechanical locking device thereby securing and immobilizing the bicycle.

The lock box contains a battery and an electronic actuator for the mechanical locking device. Also, a support post extends from the hub of the wheel above which the lockbox sits up to and into the lockbox. This support post provides a path for an electrical connecting wire between a hub generator and the battery contained in the lockbox.

The first arm of the U-shaped retainer includes a plurality of annular protrusions on at least a portion of its length. The mechanical locking device, then, includes an extendable member having a plurality of teeth which interdigitate with the annular protrusions on the first arm to preclude movement thereof. A solenoid is attached to the extendable member to disengage said mechanical locking device responsive to an authorized signal from an electronic touch pad. At least one illuminated light is positioned in the lockbox and shines out through at least one portal on a rear surface of the lockbox to render the bicycle more visible. More preferably, the at least one illuminated light comprises at least two illuminated lights and the at least one portal comprises at least two portals on the rear surface of said the box.

Various other features, advantages, and characteristics of the present invention will become apparent after a reading of the following detailed description.

### Brief Description of the Drawings

The preferred embodiment(s) of the present invention is/are described in conjunction with the associated drawings in which like features are indicated with like reference numerals and in which
**Fig. 1a** is a schematic side view of a first embodiment of the bicycle utilized in the stationless bicycle sharing system of the present invention;
**Fig. 1b** is a schematic front view of a lockbox used in conjunction with the first embodiment of the present invention;
**Fig. 1c** is a schematic rear view of the lockbox shown in **Fig. 1b****;**
**Fig. 2** is a schematic depiction of the various component elements of the municipal bike sharing system of the present invention;
**Fig. 3a** is a logic flow chart employed by the activation computer for unlocking responsive to a text entry;
**Fig. 3b** is a logic flow chart employed responsive to an automated phone call;
**Fig. 3c** is a logic flow chart employed responsive to smart phone application request;
**Fig. 3d** is a logic flow chart employed responsive direct entry into the lockbox;
**Fig. 4A** is a schematic perspective of a first embodiment of the scissor clamp of the present invention in an open position;
**Fig. 4B** is a schematic showing the position of the scissor clamp in **Fig. 4A** as it relates to the bicycle;
**Fig. 4C** is a schematic perspective showing the first embodiment of the scissor clamp shown in closed position;
**Fig. 4D** is a schematic showing the position of the scissor clamp in **Fig. 4C** as it relates to the bicycle;
**Fig. 4E** is a schematic perspective of the lockbox being closed around the first embodiment of the scissor clamp;
**Fig. 4F** is a schematic of the closing of the lockbox as shown in **Fig. 4E** as it relates to the bicycle;
**Fig. 4G** is a schematic perspective of the lockbox shown locked around the fingers of the first embodiment of the scissor clamp;
**Fig. 4H** is a schematic of the lockbox as shown in **Fig. 4G** as it relates to the bicycle;
**Fig. 5** is a top perspective view of the open lockbox;
**Fig. 6A** is a front view of the first embodiment of the locking system of the present invention;
**Fig. 6B** is a side view of the first embodiment of the locking system of the present invention;
**Fig. 7A** is a schematic front view depicting a bicycle being positioned to be secured to a pole;
**Fig. 7B** is a schematic top view of the bicycle shown in **Fig. 7A**;
**Fig. 7C** is a schematic front view depicting a bicycle secured to a pole;
**Fig. 7D** is a schematic top view of the bicycle shown in **Fig. 7C**; and,
**Fig. 8** is a perspective rear view of the lockbox mounted on a bicycle.

### Detailed Description of the Preferred Embodiment(s)

The two critical features of the stationless bicycle share system of the present invention are 1) an effective locking mechanism and, 2) the electronics package including the battery-powered GPS unit and the wireless communication device, the battery(ies) being recharged by a dynamic recharger such as an internal hub dynamo mounted on one of the wheels.

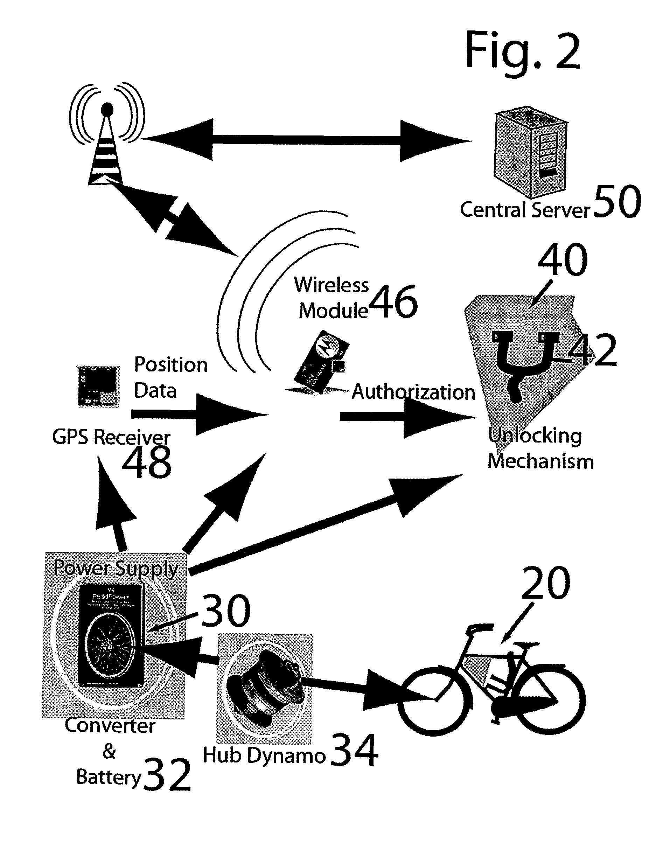

As depicted in **Fig. 2**, the components of the bike share system include a rugged, reliable bicycle **20,** a rechargeable power supply **30** system including a power converter **31** and battery **32,** a hub dynamo **34.** One suitable bike is available from Worksman Cycles of New York City, NY, manufacturers of sturdy industrial cycles for over a century. It is preferred that the bicycle be painted with a retroreflective powder coating of the type commercially available from Halo Coatings, a subsidiary of MKB LLC of Port Clinton, Ohio, under the trademark "Hi-Viz". It is desired that the cycles used in the cycle share system to be marketed under the trademark "SOBI" a contraction of "social bicycle system", be easily identifiable by the color and color scheme utilized such as an taxicab yellow, for example. By way of example, the hub dynamo **34** can be of the "V4" type available from PedalPower+ along with the connector cable and converter utilized to charge a lithium ion battery **32.**

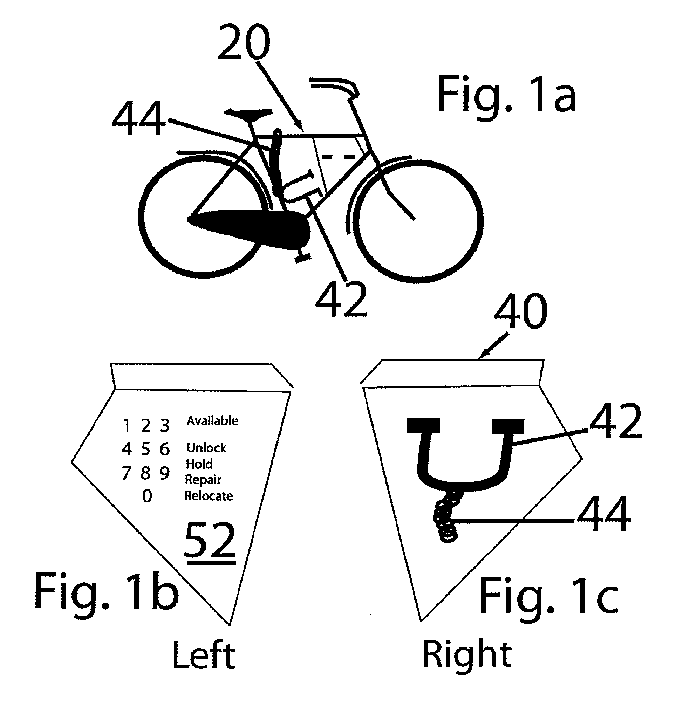

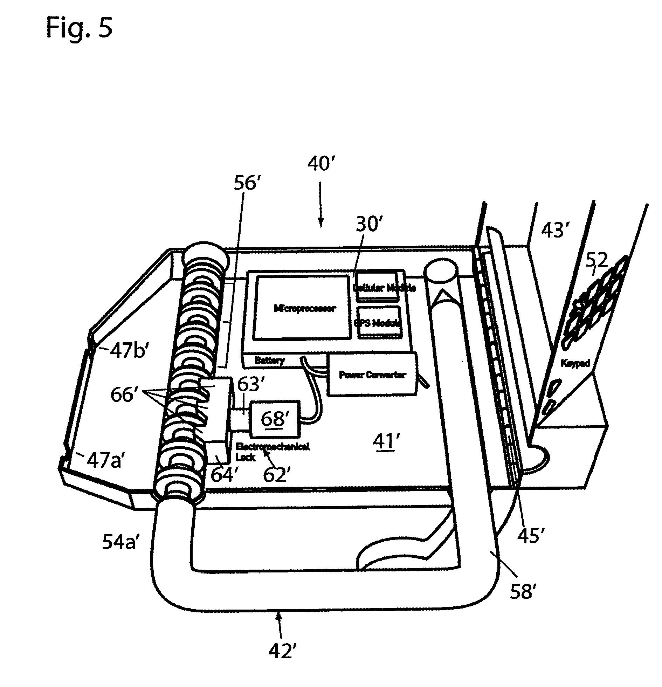

Each bicycle **20** is equipped with a lockbox **40** with a remotely operable locking mechanism which receives a U-shaped lock engaging device **42.** Within the lockbox **40** will be a wireless module **46** with a separate or associated GPS receiver **48.** One suitable system is a Motorola M2M card with an integrated GPS receiver which can offer a range of solutions for several different networks. The wireless communication card/GPS receiver is powered by battery **32.** Preferably, on the side of the lockbox **40** near the lock insertion point (Fig. 5), is a keypad **52** with a series of illuminatable messages including "Available", "Unlock", "Hold", "Repair", and "Relocate" **(****Fig. 1B****).**

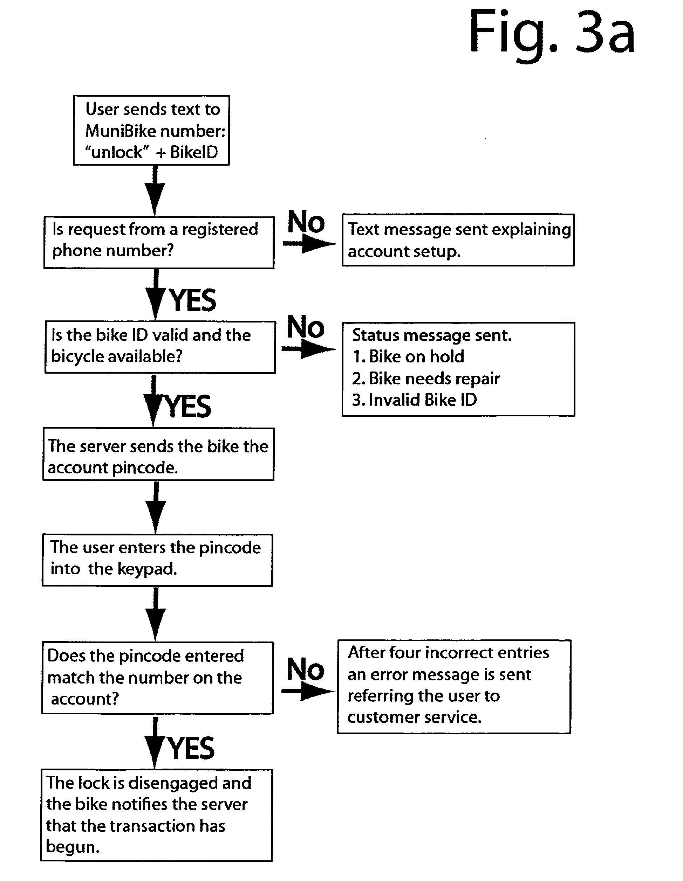

A central server **50** (Fig. 2) processes rental requests received by one of a number of means: 1) cell phone text, 2) an automated phone call; 3) a smartphone communication; 4) direct entry of the account number and authorization code into the keypad **52;** and, 5) an RFID code or other swipe card which communicates account information to the lockbox. The logic sequence for a texted message is depicted in **Fig. 3a****.** Before sending a text request a user must be registered with the system, otherwise they will receive an error message. Once registered, a user will text his unlock request along with the Bike ID to the SOBI contact number. A monitoring and control system will be set up on the central server **50.** The central server **50** will compare the phone number from which the request is made to its database to verify that the number and user information is recorded. If there is no corresponding number in the database, the server **50** sends a text message advising the potential user steps which need to be taken to set up an account. If the information matches a registered phone number, the central server then verifies that the bike ID is valid and that the bike is available. When the bike is available, the central server **50** sends the user's account pincode to the wireless module **46.** The prospective user enters her/his pincode using the keypad **52** and when it matches the code sent from the server, the lock is disengaged and the lockbox **40** notifies the central server **50** that the rental transaction has begun.

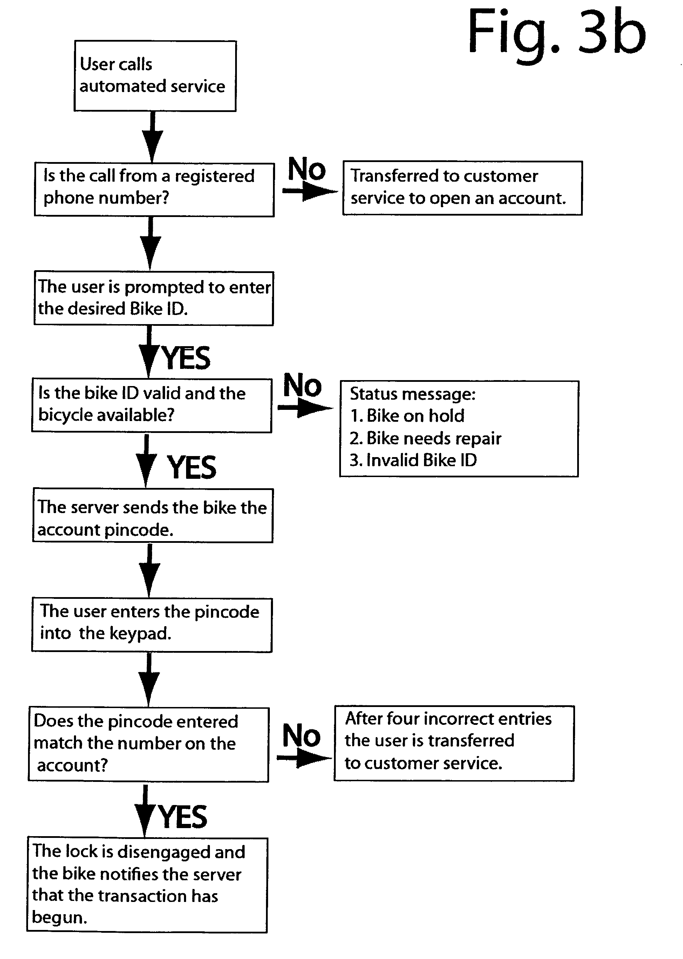

**Fig. 3b** depicts the logic sequence followed by the central server **50** for an automated phone call. When the call comes in, the server compares the originating number to numbers stored in the database. If there is no match, the potential user is transferred to customer service to allow an account to be set up. If there is a match, the automated call prompts the potential user to input the bike ID either verbally or using the keys of the phone. If the bike is not available, a voice message will explain the reason. If the bike is available, the server **50** again sends the pincode to the bike, where the potential user inputs her/his code using the keypad to initiate the rental session.

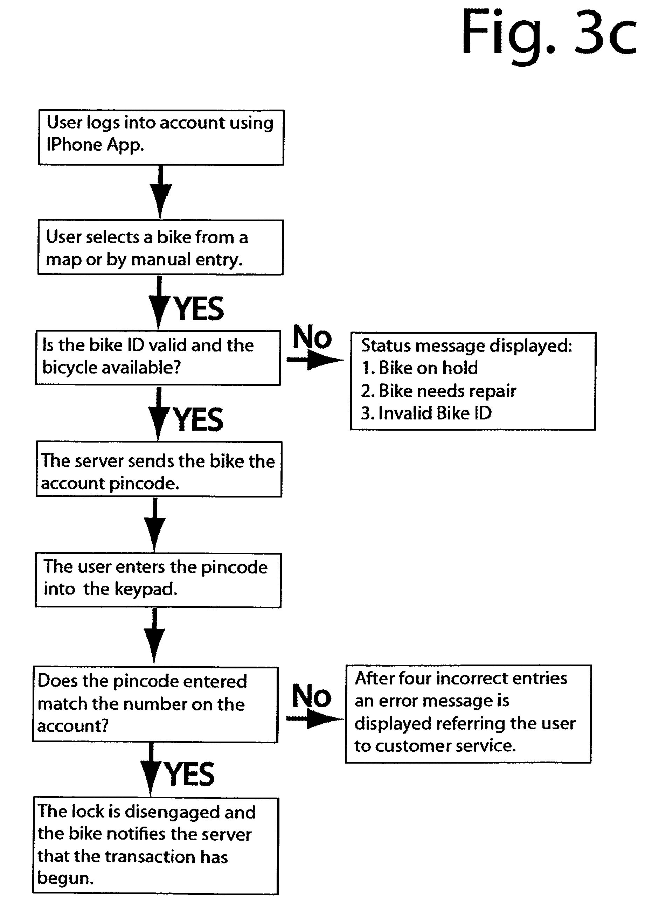

Smartphone application access is depicted in **Fig. 3c****.** The potential user logs in using a smartphone application. S/he may then select a bike from a display map showing the positions of all available bikes in the system or by entering a bike ID manually. The central server **50** compares the bike ID to the information stored in its database. If the bike is unavailable, an error message is displayed on the phone's screen.**40.** If the bike is available, the user's pincode is transmitted to the lockbox **46** and if the user enters the correct code, the lock is disengaged and the server **50** is notified that the rental session has begun.

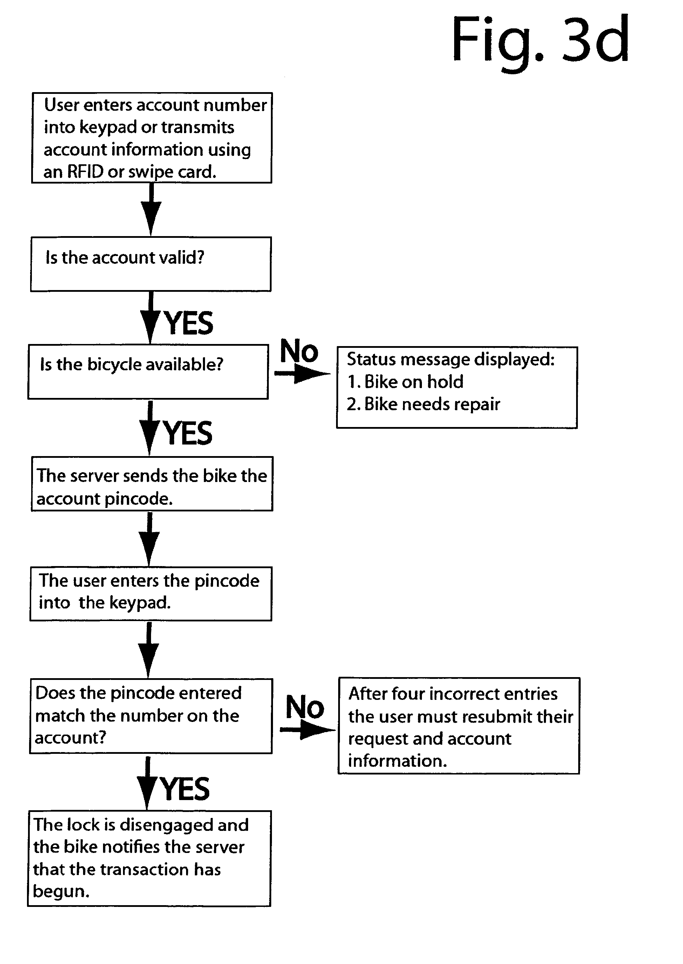

**Fig. 3d** depicts the logic steps employed when the potential user makes her/his request directly from the lockbox **40.**

The user inputs the account number (generally her/his telephone number,) directly into the lockbox **40** using the keypad **52** or by using an RFID or magnetic swipe card. The wireless communication card sends the account number **46** to the central server **50** which compares the input information to the information stored in its database. If there is a match and, hence, a valid account, the server verifies that the bike is available, and sends the pincode to the bike. If the user enters the correct pincode, the remote locking mechanism disengages the U-lock **42** and advises the server **50** that the rental session has begun.

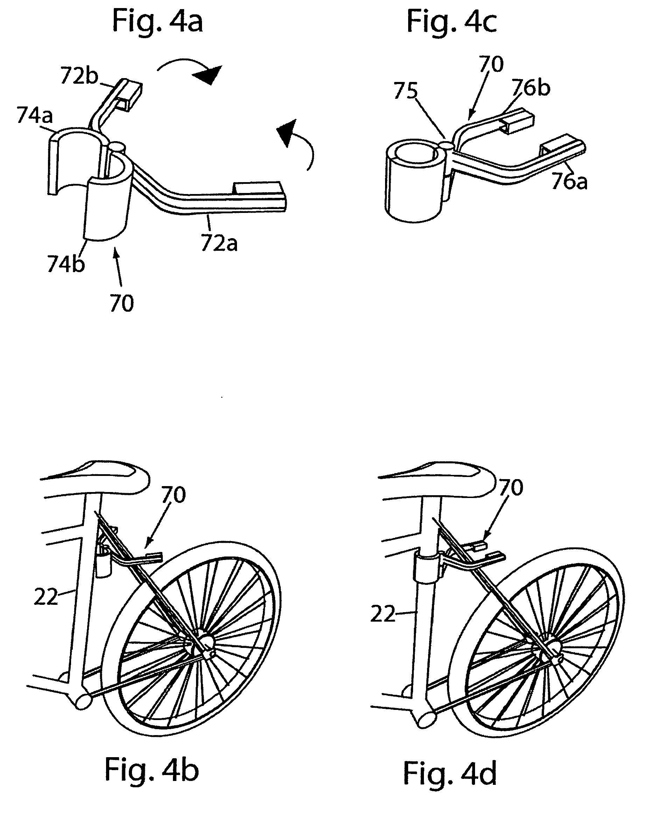

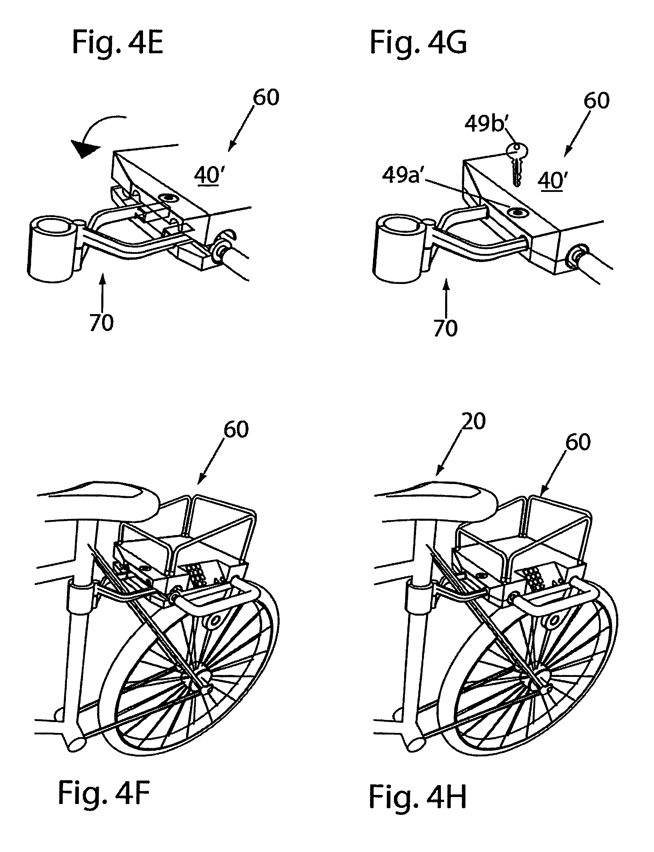

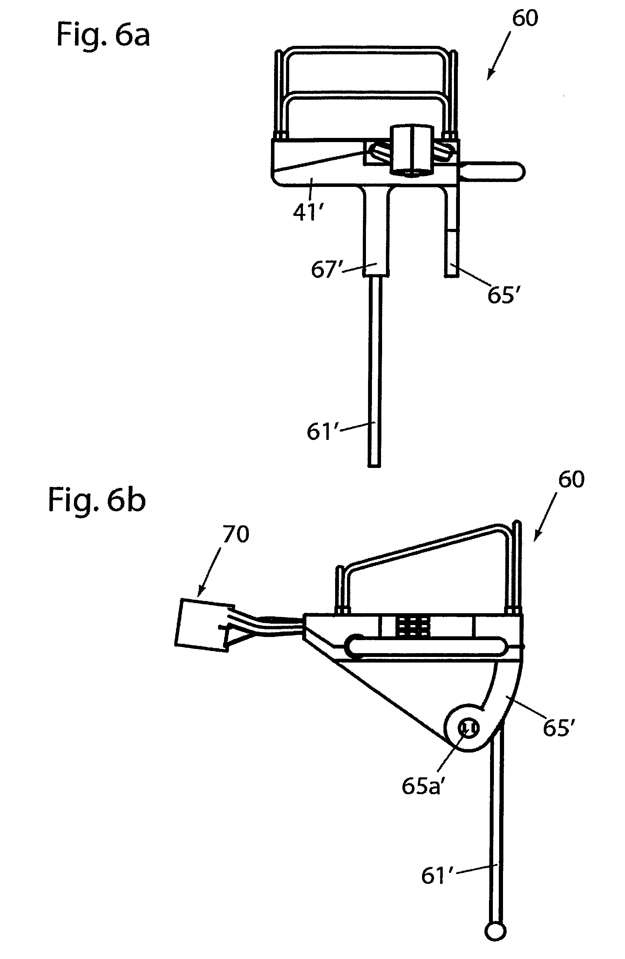

The preferred locking system of the present invention is depicted in **Figs. 4E-4H****,** **Fig. 6A, 6B** generally at **60.** Locking system **60** includes a scissor clamp **70** and lockbox **40'.** Scissor clamp **70** includes a first arm **72a** with first gripping claw **74a** on one end and a first extending finger **76a** on a second opposite end. Second arm **72b** with a second gripping claw **74b** and second extending finger **76b** is pivotally interconnected to first arm **72a** at pivot post **75.** As seen in **Figs. 4A-4D****,** gripping claws **74a, 74b** of scissor clamp **70** are entwined about seat support post **22.** Lockbox **40',** which includes a bottom wall **41'** and a top wall **43'** attached thereto by piano hinge **45' (****Fig. 5****)**, can be clamped around fingers **76a** and **76b** of scissor clamp **70** receiving said fingers in recesses **47a'** and **47b'.** Lock **49a'** is then secured by key **49b' (****Fig. 4G****)** to fixedly attach lock system **60** to bicycle **20.**

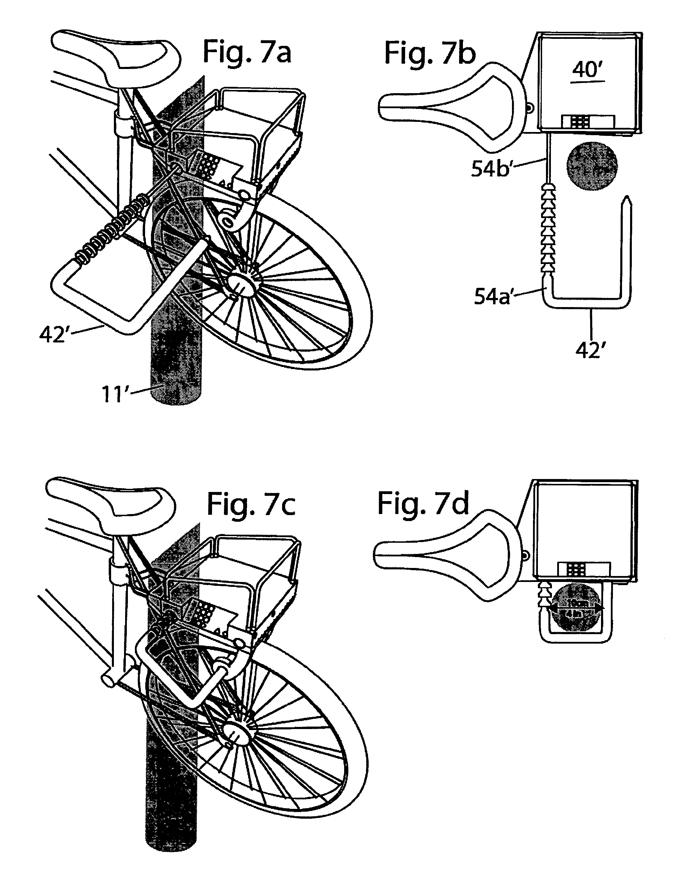

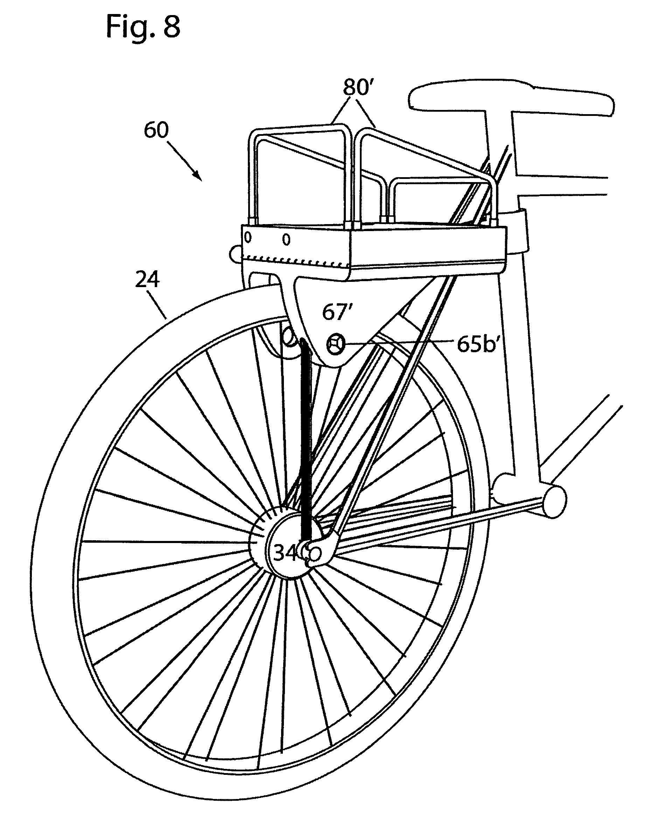

As best seen in **Fig. 5**, U-shaped retainer **42'** has a first arm **54a'** with a plurality of annular protrusions **56'** extending along at least a portion of its length. Second arm **58'** is smooth and can be pivoted between a first unlocked position in a recess within the bottom wall **41'** of lockbox **40'** to a second locking position seen in **Fig. 7C****.** A mechanical locking device **62'** includes member **64'** with a plurality of teeth **66'** configured to interdigitate with annular protrusions **56'** to preclude movement of U-shaped retainer **42'.** Locking device **62'** is mounted on the end of piston **63'** of solenoid **68'** which is used to disengage locking device **62'** at the appropriate time. As best seen in **Figs. 6a, 6b****,** lockbox **40'** further comprises a first ear **65'** which extends from bottom wall **41'** essentially from one side thereof and will be positioned on one side of bicycle wheel **24.** First ear **65'** has a throughbore **65a'** therein near its distal end. A second ear **67'** extends generally from a central portion of bottom wall **41'** and will be positioned on the opposite side of wheel **24 (****Fig. 4H****).** Second ear **67'** has a second throughbore **65b'** which is aligned with first throughbore **65a'**. Support post **61'** extends from second ear **67'** to hub dynamo **34 (****Fig. 8****)** to stabilize the lockbox **40'** and to provide a path for an electrical wire to convey electrical power from dynamo **34** to rechargeable power supply **30'.** Lockbox **40'** may be provided with a railing **80'** to enable it to serve as a platform for cargo.

When an authorized pincode is entered using keypad **52,** piston **63'** of solenoid **68'** retracts mechanical locking device **62'** allowing U-shaped retainer **42'** to be withdrawn from lockbox **40'.** If this is for placing a bicycle into use, U-shaped retainer **42'** will be removed from aligned throughbores **65a'**, **65b'** where it is disabling wheel **24** and withdrawn from around pole **11 (****Fig. 7A****),** if applicable, and reinserted in the unlocked position within the recess in the bottom wall **41'.** As can be seen in **Fig. 7b****,** one end of an extension rod **54b'** telescopes into arm **54a'** to allow it to be extended a sufficient amount to clear pole **11** so that bicycle **20** can be placed into service. The other end of extension rod **54b'** is secured to the sidewall of lockbox **40'.** It will be understood that where a suitable securing pole is not available, insertion of U-shaped retainer **42'** into aligned throughbores **65a', 65b'** and wheel **24** will serve to immobilize the bicycle **20** until an authorization code is entered into the keypad **52.**

Various changes, alternatives, and modifications will become apparent to a person of ordinary skill in the art after a reading of the foregoing specification. It is intended that all such changes, alternatives, and modifications as fall within the scope of the appended claims be considered part of the present invention.

## Claims

1. A stationless bike share system for use in municipalities, said bike share system comprising
a) a plurality of bicycles, each bicycle of said plurality having a locking system including a lock box, each said lock box including a GPS tracking system and a wireless communication device, each lock box functioning as a bicycle securing means to retain a bicycle to a stationary object against unauthorized removal, each lock box including locking means which is manually locked and remotely unlocked;
b) battery means for powering said GPS tracking system and said wireless communication device;
c) a remote monitoring system for determining location of each of said bikes, authorizing use of a particular one of said plurality of bicycles by remotely unlocking said locking means upon receipt of a confirmed request.

2. The stationless bike share system according to Claim 1 further comprising an internal hub dynamo to recharge said battery means while said bicycle is in motion.

3. The stationless bike system according to Claim 1 or 2 wherein said locking system further comprises a U-shaped lock and chain, said lock box having a plurality of recesses, each of said plurality of recesses designed to receive and secure an arm of said U-shaped lock when said arm is manually inserted therein.

4. The stationless bike system according to Claim 3 further comprising a keypad on said lock box.

5. The stationless bike system according to Claim 4 wherein said lock box can be unlocked by a remote signal in response to at least one of four inputs: a) an authorized text "Unlock" message; b) a cell phone request where a user provides proper responsive information; c) a smart phone application message; and, d) an authorization code input using said keypad.

6. The stationless bike system according to Claim 5 wherein said keypad further comprises auxiliary buttons including "Hold" to allow retention of control of said bicycle for a limited period, "Repair" transmitting a signal to said remote monitoring system advising that said bicycle is
in need of service, and "Relocate" advising said remote monitoring system of a need to move said bicycle to an alternate location and an "Available" light which illuminates when said arms of said U-shaped lock are manually inserted in said plurality of recesses without one of said auxiliary buttons being depressed.

7. A method of conducting a stationless bicycle rental business, the method comprising the steps of:
a) equipping a plurality of bicycles each with
i) a GPS tracking system;
ii) a wireless communication device;
iii) a battery to power said GPS tracking system and said wireless communication device;
iv) a lockbox containing said GPS tracking system and said wireless communication device, as well as a remotely operable lock;
b) establishing a central monitoring and control system on a remote computer;
c) determining a particular realtime position for a particular bicycle;
d) transmitting said realtime position to said central monitoring and control system;
e) receiving a signal from a prospective customer in proximity to said particular bicycle at said central monitoring and control system;
f) storing bits of information contained in said received signal in a data bank of said computer;
g) comparing said stored bits to information contained in said data bank;
h) if said stored bits do not match existing data in said stored bank, establishing a new account for said prospective customer then proceeding to the next step, and if said stored bits do match existing data in said stored bank, proceeding to the next step;
j) sending a signal to said remotely operable lock unlocking said lock allowing use of said bicycle by said prospective customer.

8. The method according to Claim 7 further comprising the step of equipping said bicycle with a dynamic means to recharge said battery during movement of said bicycle.

9. The method according to Claim 8 wherein said receiving step further comprises receiving a signal from a group consisting of a) a cell or other phone of said prospective customer; b) a smart phone application; and, c) an entry on a keypad associated with said lockbox.

10. A lock system for securing a bicycle against unauthorized use, said lock system comprising:
a) a scissor-clamp formed by a first arm and a second arm interconnected at a pivot post, each said arm having a gripping claw at one end which grasps a seat tube of a bicycle and an extending finger at a distal end of said arm;
b) a lockbox having a bottom wall and a lid, said bottom wall and said lid engaging said extending finger of each said arm in a closed, latched position securing said extending fingers against movement thereof preventing said scissor clamp from being removed from the seat tube of the bicycle.

11. The lock system according to Claim 10 further comprising
c) a U-shaped retainer having a first arm with a plurality of cylindrical protrusions, a second arm which can be extended outside said lockbox;
d) a mechanical locking device which engages said first arm of said U-shaped retainer preventing relative movement between said U-shaped retainer and said lockbox;
e) a first ear protruding from a lower side of said bottom of said lockbox on a first side of a wheel of the bicycle, said first ear having a first throughbore;
f) a second ear protruding from a lower side of said bottom of said lockbox on a second side of the wheel of the bicycle, said second ear having a second throughbore which is aligned with said first throughbore;
whereby said second arm of said U-shaped retainer is extended through said first and second aligned throughbores and the wheel of the bicycle, thereby immobilizing the bicycle.

12. The lock system according to Claim 11 wherein said U-shaped retainer is extended about a post prior to said first arm being engaged by said mechanical locking device thereby securing and immobilizing the bicycle.

13. The lock system according to Claim 11 or 12 wherein said lockbox contains a battery and a electronic actuator for said mechanical locking device.

14. The lock system according to Claim 13 further comprising a support post extending to said lockbox from a hub of the wheel above which said lockbox sits, said support post providing a path for an electrical connecting wire between a hub generator and said battery contained in said lockbox.

15. The lock system according to any one of Claims 10 to 14 further comprising at least one illuminated light positioned in said lockbox and shining out through at least one portal on a rear surface of said lockbox to render the bicycle more visible.
